# EUROPEAN PATENT APPLICATION

(11) **EP 2 383 621 A1**
(43) Date of publication of application: **02.11.2011**
(21) Application number: 11163982.9
(22) Date of filing: 28.04.2011
(51) Int. Cl.: G05B 13/04

(54) **Yeast growth maximization with feedback for optimal control of filled batch fermentation in a biofuel manufacturing facility**

(30) Priority: 30.04.2010 US 771496
(71) Applicant: Rockwell Automation Technologies, Inc., Mayfield Heights, OH 44124 (US)
(72) Inventor: Budaraju, Srinivas, Austin, TX 78717 (US); Bartee, James, Milwaukee, WI 53204 (US)
(74) Representative: Grünecker, Kinkeldey, Stockmair & Schwanhäusser

(57) **Abstract**

The present invention provides novel techniques for controlling biofuel production processes. In particular, estimated yeast activity values are determined by yeast activity sensors. These estimated yeast activity values are used to bias predicted yeast activity values from an inferential dynamic predictive model. The biased predicted yeast activity values are in turn used to control a fermentation sub-process of the biofuel production process, while also be used to update the inferential dynamic predictive model, to maximize yeast activity in the fermentation sub-process. Maximizing yeast activity and yeast growth in the fermentation sub-process leads to the maximization of biofuel production in the biofuel production process.

## Description

### BACKGROUND

The invention relates generally to control systems, and more particularly to model predictive control of fermentation sub-processes of a biofuel production process using biased predicted values of yeast activity generated by yeast activity sensors.

### BRIEF DESCRIPTION

Many processing plants, such as biofuel production plants, include fermentation processes where yeast is mixed with a biomass to produce a fermented product, such as biofuel. In general, maximization of biofuel production may be correlated to the amount of yeast activity and yeast growth in the fermentation processes. As such, controlling the yeast activity and yeast growth in the fermentation processes may lead to greater biofuel yields. However, direct measurement of yeast activity and yeast growth has not been possible in conventional systems.

### DRAWINGS

These and other features, aspects, and advantages of the present invention will become better understood when the following detailed description is read with reference to the accompanying drawings in which like characters represent like parts throughout the drawings, wherein:

FIG. 1 is a diagram of an exemplary biofuel production plant;

FIG. 2 is a flowchart of an exemplary method for integrated model predictive control of a biofuel production process, which may be carried out by the biofuel production plant of FIG. 1;

FIG. 3 is a graphical representation of control of fermentation sub-processes of the biofuel production plant of FIG. 1 to an optimized trajectory for a controlled variable of the fermentation sub-processes, and an actual trajectory achieved by adjusting values for the manipulated variables during the fermentation sub-processes;

FIG. 4 is a block diagram of an exemplary embodiment of a control system for controlling the fermentation sub-processes of the biofuel production plant of FIG. 1, which may implement the method of FIG. 2;

FIG. 5 is a diagram of an exemplary embodiment of a fermentation dynamic predictive model of the control system of FIG. 4, illustrating input parameters and output parameters of the fermentation dynamic predictive model;

FIG. 6 is a schematic diagram illustrating how estimated yeast activity measurements may be generated;

FIG. 7 is a diagram illustrating exemplary biasing logic that utilizes estimated yeast activity values determined by yeast activity sensors of FIG. 6; and

FIG. 8 is a graphical representation of the control of yeast activity in the biofuel production plant of FIG. 1.

### DETAILED DESCRIPTION

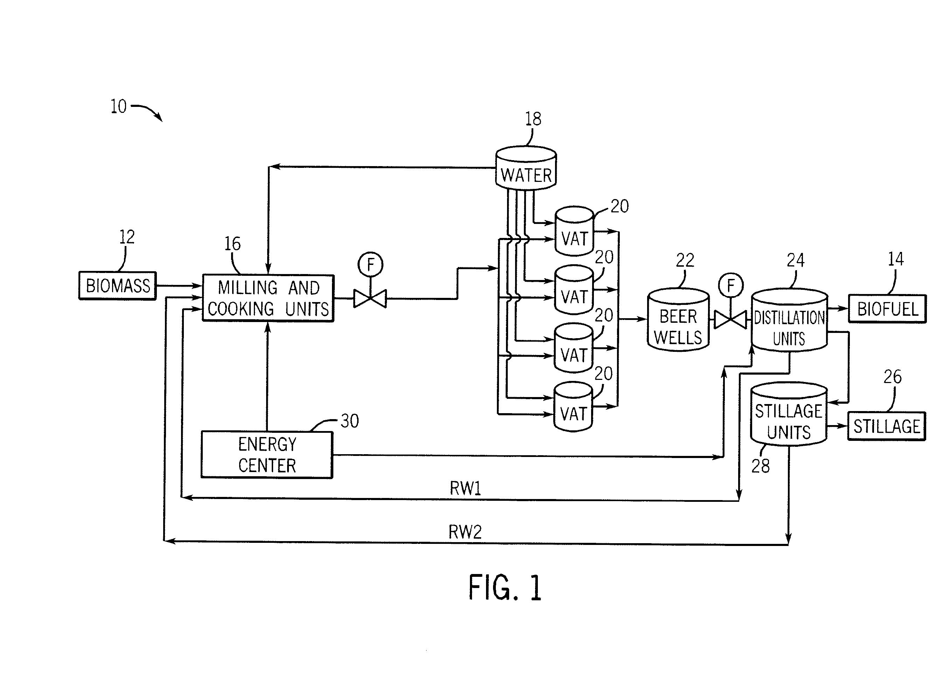

Turning now to the drawings, FIG. 1 is a diagram of an exemplary biofuel production plant 10, illustrating how biomass 12 may be processed through several stages to produce biofuel 14. Biomass 12 may first be provided to a milling and cooking process, e.g., milling and cooking units 16, where water 18 (and possibly recycled water RW1 and RW2) may be added and the biomass 12 may be broken down to increase the surface area-to-volume ratio. This increase in surface area may allow for sufficient interaction of the water 18 and biomass 12 to achieve a solution of fermentable sugars in water 18. The mixture, a slurry of biomass 12 and water 18, may be cooked to promote an increase in the amount of contact between the biomass 12 and water 18 in solution and to increase the separation of carbohydrate biomass from non-carbohydrate biomass. The output of the milling and cooking units 16 (i.e., the fermentation feed or mash) may then be sent to a fermentation process, where one or more fermentation vats 20 (e.g., fermenters) may operate to ferment the biomass/water mash produced by the milling and cooking units 16.

The fermentation process may require additional water 18 to control the consistency of material to the fermenters 20 (also referred to herein as fermentation tank). Biomass 12 may be converted by yeast and enzymes into a biofuel 14 and by-products such as carbon dioxide, water, and non-fermentable biomass (solids) in the fermenters 20. As illustrated, the fermentation process is a batch process and may include multiple fermenters 20 operating in parallel. The batch start times may be staggered between the fermenters 20 in order to optimize the utilization of the capacity of one or more beer wells 22 and smoothly distribute the flow of fermentation feed to the fermentation process and the flow of biofuel 14 and stillage as output from the fermentation process. As described in greater detail below, the rate of yeast activity and yeast growth within the fermenters 20 may also be periodically monitored, with the measurements being used to bias output parameters of a dynamic predictive model to optimize control of the fermenters 20.

After being temporarily stored in the beer wells 22, the output from the fermenters 20 may be sent to a distillation process, e.g., one or more distillation units 24, to separate biofuel 14 from water 18, carbon dioxide, and non-fermentable solids. If the biofuel 14 has to be dehydrated to moisture levels less than 5% by volume, the biofuel 14 may also be processed through a processing unit incorporating a molecular sieve or similar processing units (not shown). The finalized biofuel 14 may then be processed, where desired, to ensure it is denatured and not used for human-consumption.

The distillation units 24 may separate the biofuel 14 from water 18. Water 18 may be used in the form of steam for heat and separation, and the condensed water may be recycled (RW1) back to the milling and cooking units 16. Stillage (non-fermentable solids and yeast residue) 26, the heaviest output of the distillation units 24, may be sent to stillage processing units 28 for further development of co-products from the biofuel 14 production process.

The stillage processing units 28 may separate additional water from the cake solids and recycle the water (RW2) back to the milling and cooking units 16. Several stillage processing options may be utilized, including: (1) selling the stillage with minimal processing, and (2) further processing the stillage by separating moisture from the solid products via one or more centrifuge units (not shown). Using the centrifuge units, the non-fermentable solids may be transported to dryers (not shown) for further moisture removal. A portion of the stillage liquid (concentrate) may also be recycled back to the fermenters 20. However, the bulk of the flow may generally be sent to evaporator units (not shown), where more liquid may be separated from the liquid stream, causing the liquid stream to concentrate into syrup, while solid stillage may be sent to a drying process, e.g., using a drying unit or evaporator, to dry the solid stillage to a specified water content. The syrup may then be sent to a syrup tank (not shown). Syrup in inventory may be processed using a number of options. For instance, the syrup may be: (1) sprayed in dryers to achieve a specified color or moisture content, (2) added to the partially dried stillage product, or (3) sold as a separate liquid product. The evaporator units may have a water by-product stream that is recycled back to the milling and cooking units 16.

An energy center 30 may supply energy to many of the processing units, e.g., the milling and cooking units 16, the distillation unit 24 and any molecular sieve units, and the stillage processing units 28. The energy center 30 may constitute a thermal oxidizer unit and heat recovery steam generator (HRSG) that may destroy volatile organic compounds (VOCs) and provide steam to the evaporators, distillation units 24, cooking system units (e.g., in the milling and cooking units 16), and dehydration units. The energy center 30 may typically be the largest source of heat in a biofuel production plant 10.

One or more of the processes described above may be managed and controlled via model predictive control utilizing a dynamic multivariate predictive model that may be incorporated as a process model in a dynamic predictive model-based controller. In particular, various systems and methods are provided for using model predictive control to improve the yield, throughput, energy efficiency, and so forth of biofuel sub-processes in accordance with specified objectives. In particular, the fermentation sub-processes described herein may be controlled using fermentation model predictive control in accordance with specific fermentation objectives (e.g., biofuel production, yeast activity, yeast growth, and so forth). These objectives may be set and various portions of the sub-processes controlled continuously to provide real-time control of the production process. The control actions may be subject to or limited by plant and external constraints.

Each of the illustrated sub-processes may operate within the larger biofuel production process to convert biomass 12 to biofuel 14 and possibly one or more co-products. Thus, the biofuel production plant 10 may typically include four plant sections: milling/cooking, fermentation, distillation/sieves, and stillage processing. Each of these sub-processes may be at least partially dependent upon operation of one or more of the other sub-processes. Moreover, operating conditions that may be optimal for one sub-process may entail or cause inefficiencies in one or more of the other sub-processes. Thus, a plant bottleneck, meaning a local limitation that limits or restricts a global process, may occur in any of the above four sub-processes, thus limiting the overall operation of the biofuel production plant 10.

Thus, an operating challenge for biofuel production is to manage the various sub-processes, and possibly the entire system or process, to automatically respond to a constraint or disruption in the production system or process. Integrated model predictive control may be used to manage the biofuel production process in a substantially optimal manner, balancing various, and possibly competing, objectives of the sub-processes to approach, meet, and/or maintain objectives for the overall process. More specifically, as described in greater detail below, the disclosed embodiments of model predictive control may be used to maximize the growth of yeast in the fermenters 20, thereby maximizing the total biofuel production of the biofuel production plant.

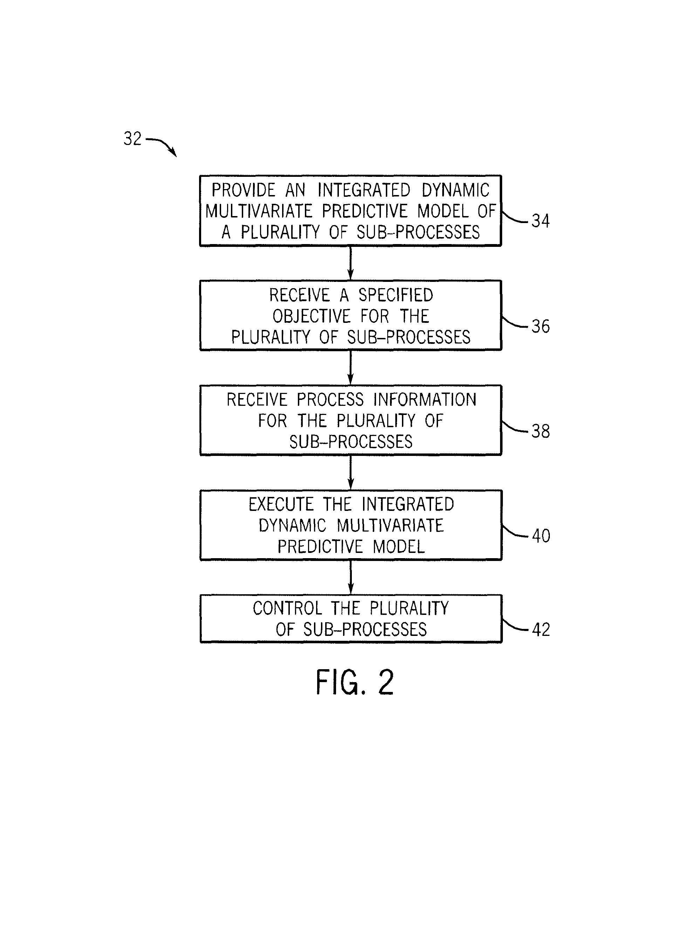

FIG. 2 is a flowchart of an exemplary method 32 for integrated model predictive control of a biofuel production process, which may be carried out by the biofuel production plant of FIG. 1. More specifically, embodiments of the method 32 may apply model predictive control techniques to manage multiple sub-processes of the biofuel production process in an integrated manner. Note that in various embodiments, many of the method steps may be performed concurrently, in a different order than shown, or may be omitted. Additional method steps may also be performed.

In step 34, an integrated dynamic multivariate predictive model representing a plurality of sub-processes of the biofuel production process may be provided. In other words, a model may be provided that specifies or represents relationships between attributes or variables related to the sub-processes, including relationships between inputs to the sub-processes and resulting outputs of the sub-processes.

The model may be of any of a variety of types. For example, the model may be linear or nonlinear, although for most complex processes, a nonlinear model may be preferred. Other model types contemplated include fundamental or analytical models (i.e., functional physics-based models), empirical models (such as neural networks or support vector machines), rule-based models, statistical models, standard model predictive control models (i.e., fitted models generated by functional fit of data), or hybrid models using any combination of the above models.

The integrated dynamic multivariate predictive model may include a set of mathematical relationships that includes steady state relationships and may also include the time lag relationship for each parameter change to be realized in the output. A great variety of dynamic relationships may be possible and each relationship between variables may characterize or capture how one variable may affect another and also how fast the effects may occur or how soon an effect may be observed at another location.

The integrated dynamic multivariate predictive model may be created from a combination of relationships based on available data such as fundamental dynamic and gain relationships, available plant historic process data, and supplementary plant testing on variables that may not be identified from the two previous steps. Models may be customized to the plant layout and design, critical inventories, plant constraints and measurements, and controllers available to manage variables. Moreover, in some embodiments, external factors, such as economic or regulatory factors, may be included or represented in the model.

An important characteristic of the integrated dynamic multivariate predictive model may be to identify when a control variable changes as a result of a change in one or more manipulated variables. In other words, the model may identify the time-response (e.g., time lag) of one or more attributes of a sub-process with respect to changes in manipulated variables. For example, once a controller adjusts pump speeds, there may be a certain time-dependent response before observing an effect at a tank being filled. This time-dependent response may be unique for each independent controller. For instance, flow rates may vary because of differences in system variables (e.g., piping lengths, tank volumes, and so forth) between the control actuator and sensor and the pump location.

In certain embodiments, the integrated dynamic multivariate predictive model may include inferential models (also referred to as property approximators or virtual online analyzers (VOAs)). An inferential model may be a computer-based model that calculates inferred quality properties from one or more inputs of other measured properties (e.g., process stream or process unit temperatures, flows, pressures, concentrations, levels, and so forth). For example, as described in greater detail below, an exemplary inferential model may calculate yeast activity and yeast growth (e.g., properties than cannot easily be directly measured) based on other properties that can be directly measured. In certain embodiments, the integrated dynamic multivariate predictive model may be subdivided into different portions and stored in a plurality of memories. The memories may be situated in different locations of the biofuel production plant 10. The controller may communicate with the memories utilizing a communication system.

In step 36, a specified objective for the plurality of sub-processes may be received. The objective may specify a desired behavior or outcome of the biofuel production process. In certain embodiments, the objective may be somewhat complex or compound. For example, the objective may include a global objective and a plurality of sub-objectives directed to at least a subset of the plurality of sub-processes. In other words, the specified objective may include an overall objective for the biofuel production process, e.g., maximize throughput, efficiency, and so forth, and may also include various subsidiary objectives related specifically to the respective sub-processes, e.g., maximize yeast growth in the fermentation sub-processes. In addition, the sub-objectives may be mutually exclusive or competitive with respect to each other and/or with respect to the global objective.

Exemplary objectives may include, but are not limited to, one or more operator-specified objectives, one or more predictive model specified objectives, one or more programmable objectives, one or more target feed rates, one or more cost objectives, one or more quality objectives, one or more equipment maintenance objectives, one or more equipment repair objectives, one or more equipment replacement objectives, one or more economic objectives, one or more target throughputs for the biofuel production process, one or more objectives in response to emergency occurrences, one or more dynamic changes in materials inventory information, one or more dynamic changes in available process energy constraints, or one or more dynamic changes in one or more constraints on the biofuel production process, and so forth.

It should be noted that as used herein, the terms "maximum," "minimum," and "optimum," may refer respectively to "substantially maximum," "substantially minimum," and "substantially optimum," where "substantially" indicates a value that is within some acceptable tolerance of the theoretical extremum, optimum, or target value. For example, in one embodiment, "substantially" may indicate a value within 10% of the theoretical value. In another embodiment, "substantially" may indicate a value within 5% of the theoretical value. In a further embodiment, "substantially" may indicate a value within 2% of the theoretical value. In yet another embodiment, "substantially" may indicate a value within 1% of the theoretical value. In other words, in all actual cases (non-theoretical), there are physical limitations of the final and intermediate control element, dynamic limitations to the acceptable time frequency for stable control, or fundamental limitations based on currently understood chemical and physical relationships. Within these limitations, the control system will generally attempt to achieve optimum operation, i.e., operate at a targeted value or constraint (maximum or minimum) as closely as possible.

In step 38, process information related to the plurality of sub-processes may be received from the biofuel production process. This process information may be any type of process information, including state or condition information measured by sensors (e.g., temperatures, pressures, real-time measurements of the biofuel in the fermentation system, and so forth), computed algorithmically, inferred from models (i.e., inferential models), taken from lab values, entered by operators, and so forth. The process information may further include equipment settings, flow rates, material properties (e.g. densities), content profiles, purity levels, ambient conditions (e.g., time of day, temperature, pressure, humidity, and so forth), economic or market conditions (e.g., cost of materials or product), and so forth. In other words, the process information may include any information that affects or influences any part of the biofuel production process. More specifically, the process information may include measurements of one or more control variables and one or more manipulated variables related to the sub-processes and one or more variables of other processes that may impact the sub-processes, as well as information from inferential models, laboratory results, and so forth. The process information may be communicated to the controller from a distributed control system.

In step 40, the integrated dynamic multivariate predictive model may be executed in accordance with the objective using the received process information as inputs, thereby generating model outputs comprising target values of one or more controlled variables related to one or more of the plurality of sub-processes in accordance with the objective. In other words, the model may be executed to determine target values for manipulated variables for one or more of the sub-processes that may be used to control the sub-processes in such a way as to attempt to meet the specified objective.

In step 42, the plurality of sub-processes of the biofuel production process may be controlled in accordance with the target values and the objective. In other words, a controller (or a plurality of controllers) may modulate or otherwise control various operational aspects of the sub-processes in accordance with the target values of the manipulated variables. In some embodiments, the target values may simply be used as set points by the controller. In other words, the controller may set respective inputs of the various sub-processes to the respective target values.

Steps 36, 38, 40, and 42 of the method 32 may be performed a plurality of times in an iterative manner to operate the biofuel production process in a substantially optimal fashion. In other words, the method 32 described above may be performed substantially continuously, such as at a specified frequency, providing control of the biofuel production process in substantially real time to optimize the biofuel production process with respect to the specified objective.

In embodiments where multiple objectives may be provided, possibly at odds with one another, an optimizer may be used to balance the various sub-objectives in attempting to meet the global objective. In other words, an optimizer may be used to determine how to compromise with respect to the various sub-objectives in attempting to achieve the global objective. Thus, in certain embodiments, executing the integrated dynamic multivariate predictive model may include an optimizer executing the integrated dynamic multivariate predictive model to generate the model output. The generated model output may include the target values of one or more variables related to one or more of the plurality of sub-processes in accordance with the global objective and the plurality of sub-objectives. In certain embodiments, the optimizer may execute the integrated dynamic multivariate predictive model a plurality of times in an iterative manner. For example, the optimizer may repeatedly execute the model using various inputs and compare the resulting outputs to the specified objective (including the sub-objectives), thereby searching the solution space for input configurations that optimize the outcome, e.g., that allow the global objective to be met or at least approached, while minimizing the compromises made with respect to the various sub-objectives.

In certain embodiments, the method 32 may further include receiving constraint information specifying one or more constraints, such as limitations on one or more aspects or variables of the biofuel production process. The optimizer may execute the integrated dynamic multivariate predictive model in accordance with the objective using the received process information and the one or more constraints as inputs, thereby generating the model outputs in accordance with the objective and subject to the one or more constraints. The one or more constraints may include any such limitation on the biofuel production process including, but not limited to, one or more of: batch constraints (e.g., fermentation time), water constraints, feed constraints, equipment constraints, capacity constraints, temperature constraints, pressure constraints, energy constraints, market constraints, economic constraints, environmental constraints, legal constraints, operator-imposed constraints, and so forth. Furthermore, examples of equipment constraints may include, but are not limited to, one or more of: operating limits for pumps, operational status of pumps, tank capacities, operating limits for tank pressures, operational status of tanks, operating limits for valve pressures, operating limits for valve temperatures, operating limits for pipe pressures, operating limits for energy provision, operating limits for molecular sieves, and so forth. Moreover, in certain embodiments, the constraint information may include dynamic constraint information. In other words, some of the constraints may change dynamically over time. Therefore, the method 32 may automatically adjust operations taking into account these changing constraints.

In certain embodiments, the system may derive its measurements or process information from the process instruments or sensors, inferential models, real-time measurements of the biofuel in the fermentation sub-processes, and/or lab values, and execute linear or non-linear dynamic prediction models to solve an overall optimization objective which may typically be an economic objective function subject to dynamic constraints of the plant processes. The system may then execute the integrated dynamic multivariate predictive model, controller, and optimizer in accordance with the objective, e.g., the optimization function.

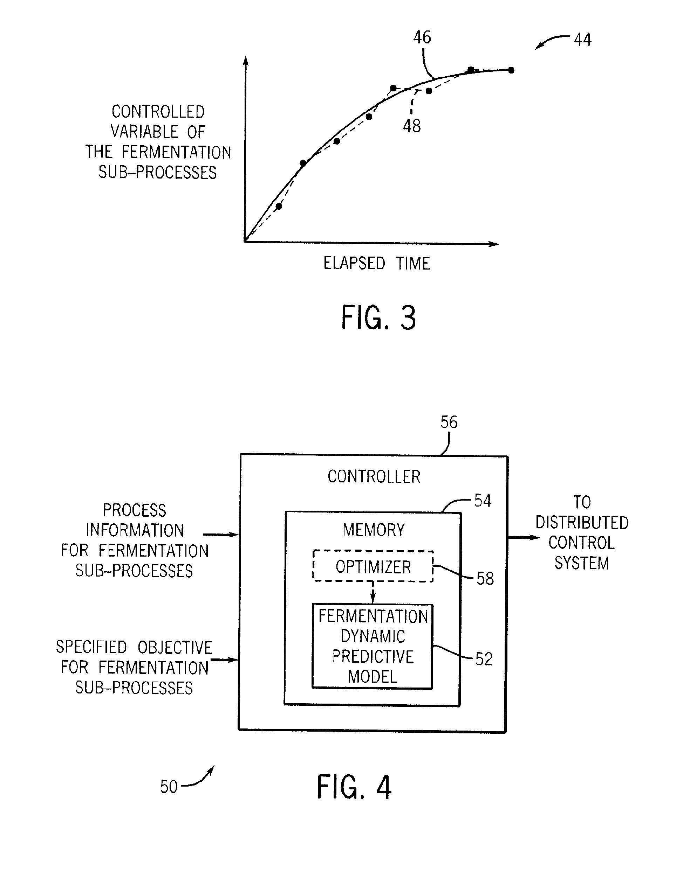

As described above, the integrated dynamic multivariate predictive model may model a plurality of sub-processes of the biofuel production plant 10 of FIG. 1. For example, the integrated dynamic multivariate predictive model may model the fermentation sub-processes. More specifically, in certain embodiments, the fermenters 20 of the biofuel production plant 10 (as well as other equipment associated with the fermentation sub-processes) may be controlled by adjusting the values of manipulated variables of the fermentation sub-processes and monitoring the subsequent changes in one or more controlled variables of the fermentation sub-process. FIG. 3 is a graphical representation 44 of control of the fermentation sub-processes to an optimized trajectory 46 for a controlled variable of the fermentation sub-processes (e.g., biofuel concentration), and an actual trajectory 48 achieved by adjusting values for the manipulated variables during the fermentation sub-processes. The fermentation sub-processes may be managed and controlled via model predictive control (MPC) utilizing the integrated dynamic multivariate predictive model, which may be incorporated as a process model into a dynamic predictive model-based controller.

FIG. 4 is a block diagram of an exemplary embodiment of a control system 50 for controlling the fermentation sub-processes of the biofuel production plant 10 of FIG. 1, which may implement the method 32 of FIG. 2. The control system 50 may include a fermentation dynamic predictive model 52 stored in a memory medium 54, and a controller 56 coupled to the memory medium 54. The term "memory medium" is intended to include various types of memory or storage, including an installation medium (e.g., a CD-ROM or floppy disks), a computer system memory or random access memory (e.g., DRAM, SRAM, and so forth), or a non-volatile memory such as a magnetic medium (e.g., a hard drive or optical storage).

As described above, the controller 56 may be operable to: receive an objective for the fermentation sub-processes of the biofuel production plant 10, receive process information related to the fermentation sub-processes (including information from a laboratory and/or inferred property models), execute the model in accordance with the objective for the fermentation sub-processes using the received corresponding process information as input, to generate model output comprising target values for one or more variables related to the fermentation sub-processes in accordance with the objective for the fermentation sub-processes. In addition, as described above, the controller 56 may control the fermentation sub-processes of the biofuel production plant 10 in accordance with the corresponding targets and objective for the fermentation sub-processes.

In certain embodiments, the controller 56 may output the target values to a distributed control system for the biofuel production plant 10. In certain embodiments, the target values may include or be one or more trajectories of values over a time horizon, e.g., over a prediction or control horizon. Process information may include measurements of a plurality of process variables for the fermentation sub-processes and other inter-related sub-processes, information on one or more constraints, and/or information about one or more disturbance variables related to the fermentation sub-processes. Process information may be received from the distributed control system for the biofuel production plant 10, entered by an operator, or provided by a program. For example, in addition to values read (by sensors) from the actual process, the process information may include laboratory results, and output from inferred property models, e.g., virtual online analyzers (VOAs), among other information sources.

The control system 50 used to implement the present techniques may be open or closed. Open loop systems are only defined by the inputs and the inherent characteristics of the system or process. In the biofuel production process, the system may be the entire biofuel production plant 10, one sub-process of the biofuel production plant 10, such as the milling and cooking units 16, or control of a variable in a process such as the temperature of the milling and cooking units 16. In a closed loop system, the inputs may be adjusted to compensate for changes in the output where, for example, these changes may be a deviation from desired or targeted measurements. A closed loop system may sense a change and provide a feedback signal to a process input. Process units in the biofuel production plant 10 may be closed loop systems if they need to be regulated subject to constraints such as product quality, energy costs, process unit capacity, and so forth. Traditional PID controllers and other control systems such as ratio controls, feed-forward controls, and process models may be used to control biofuel production processes. A distributed control system may have many control schemes set up to control the process unit variables at the local control level.

The control system 50 may include a computer system with one or more processors, and may include or be coupled to at least one memory medium 54 (which may include a plurality of memory media 54), where the memory medium 54 may store program instructions according to the present techniques. In various embodiments, controllers may be implemented on a single computer system communicatively coupled to the biofuel production plant 10, or may be distributed across two or more computer systems, e.g., that may be situated at more than one location. In this embodiment, the multiple computer systems comprising the controllers may be connected via a bus or communication network.

The control system 50 for the biofuel production plant 10 may include one or more computer systems that interact with the biofuel production plant 10 being controlled. The computer systems may represent any of various types of computer systems or networks of computer systems that execute software programs according to various embodiments of the present techniques. The computer systems may store (and execute) software for managing sub-processes in the biofuel production plant 10. The software programs may perform various aspects of modeling, prediction, optimization, and/or control of the sub-processes. Thus, the control system 50 may implement predictive model control of the sub-processes in the biofuel production plant 10. The system may further provide an environment for making optimal decisions using an optimization solver (i.e., an optimizer 58) and carrying out those decisions (e.g., to control the plant).

One or more software programs that perform modeling, prediction, optimization and/or control of the biofuel production plant 10 may be included in the computer systems. Thus, the systems may provide an environment for a scheduling process of programmatically retrieving process information relevant to the sub-processes of the biofuel production plant 10, and generating actions to control the sub-processes, and possibly other processes and aspects of the biofuel production plant 10. Also, the computer systems may take various forms, including a personal computer system, mainframe computer system, workstation, network appliance, Internet appliance or other device. In general, the term "computer system" may be broadly defined to encompass any device (or collection of devices) having a processor (or processors) that executes instructions from a memory medium. The memory medium (which may include a plurality of memory media) may preferably store one or more software programs for performing various aspects of model predictive control and optimization. A CPU, such as the host CPU, executing code and data from the memory medium may include a means for creating and executing the software programs.

In one embodiment, the control system 50 may control the growth of yeast through the fermentation sub-processes to achieve an optimal or targeted biofuel production trajectory, via the fermentation dynamic predictive model 52 of the biofuel production plant 10. For example, the fermentation dynamic predictive model 52 of the biofuel production plant 10 may relate changes in fermentation processing input information to yeast growth. In turn, maximization of yeast growth throughout the duration of the fermentation sub-processes may indirectly lead to the maximization of biofuel production.

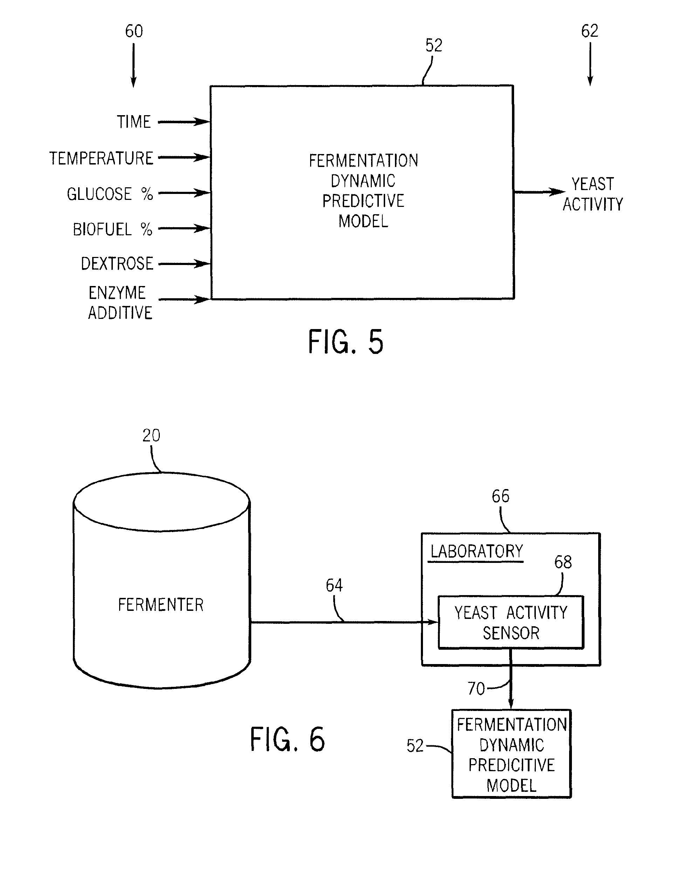

In conventional systems, it has not been possible to directly measure yeast growth. As such, yeast growth has typically been inferred based on other variables that are more readily available. For example, certain parameters of the fermentation processes of the biofuel production plant 10 may be used by the fermentation dynamic predictive model 52 to infer the actual value of yeast growth in the fermentation sub-processes. FIG. 5 is a diagram of an exemplary embodiment of the fermentation dynamic predictive model 52, illustrating input parameters 60 and output parameters 62 of the fermentation dynamic predictive model 52. As illustrated, the input parameters 60 used to infer the primary output parameter 62 of yeast activity include time, temperatures of the fermentation sub-processes, glucose concentrations, biofuel concentrations, dextrose concentrations, enzyme addition rate, and so forth. However, other input parameters 60 may be used as well. Once the yeast activity has been predicted, it may be used to predict yeast growth, which in turn may be used to predict biofuel production rates.

Note that while the input parameters 60 have influences on many of the critical biofuel production performance parameters, many of these influences may be independent (e.g. increasing temperature may increase cell death more than growth, even while increasing enzyme activity and nutrition availability to cells). In these relationships, a nonlinear model may be utilized because many of these dependencies may have varied responses at different times during a batch cycle (e.g. cells may become sensitized to higher biofuel concentrations later in a batch cycle, and/or cells may be more temperature tolerant at the beginning of a batch). In addition, enzyme activity, although dependent on temperature, may have changing dependencies at varying pH levels.

The complex nature of these biological systems present challenges for model development. In general, a more accurate model will provide more complete and accurate relationships between what may be changed (e.g. fermentation temperature, pH, etc.) and what may result from these changes (e.g., yeast growth and biofuel production). Consequently, it may be assumed that a simple model provided with plant operation information (e.g., controller options) may perform better than repeatedly applying the same recipe, e.g., traditional "rules of thumb." Since biomass quality changes, plant operating limits (e.g., equipment capability) change, ambient conditions change, and plant economics (e.g., biomass costs, biofuel costs, processing/energy costs, and by-product demand and costs) change, the fermentation dynamic predictive model 52 will perform better if the inferred output parameters 62 (e.g., yeast activity) are biased by actual measurements periodically. However, as described above, direct measurement of yeast growth and yeast activity has not been possible in conventional biofuel production systems.

However, in certain embodiments, periodic laboratory testing of the fermented biomass/water mash in the fermenters 20 of the biofuel production plant 10 may be used as estimates for measurements of yeast activity in the fermenters 20. One method of estimating yeast activity and growth includes microscopic cell counting. More specifically, samples of the fermented biomass/water mash from the fermenters 20 may be placed under a microscope and individual yeast cells may be counted to give an estimate of relative yeast activity over time. However, this process of manual counting can be very time-consuming, requiring a laboratory technician to actually count the many yeast cells under a microscope. In addition, this process can be very inaccurate with, for example, a first reading by a first lab technician indicating a certain amount of yeast activity and a second reading of the same sample by a second lab technician indicating a significantly different amount of yeast activity. One reason for the variability is the fact that the lab technicians may interpret viable cell counts differently. For example, if cells are somewhat grown together, the first lab technician may interpret the cells as being one viable cell, whereas the second lab technician may interpret the cells as being two viable cells. In other words, manual counting of cells may be open to a certain degree of subjectivity, which necessarily affects the consistency and reproducibility of yeast activity readings. As such, improved methods of estimating yeast activity are desired.

Another possible method of estimating yeast growth and activity is to use sensors that utilize fluorescence techniques to more accurately monitor yeast growth and activity. Samples of the fermented biomass/water mash from the fermenters 20 are mixed with chemicals in these yeast activity sensors. When the chemicals mix with the fermented biomass/water mash, living yeast cells in the sample fluoresce at specific levels according to specific metabolic activity. The yeast activity sensors detect the fluorescence and convert the fluorescence signals into quantifiable yeast activity estimates. The advantages of using these yeast activity sensors include the fact that the subjectivity of lab technicians is removed, and the fact that the estimates are determined relatively quickly (e.g., in a manner of minutes). It should be noted that the quantitative estimates from the yeast activity sensors represent generally linear relationships to the actual yeast activity. In other words, an exact quantifiable yeast activity measurement is not determined. Rather, the yeast activities estimated by the yeast activity sensors are merely representative of the true number of viable yeast cells. However, the estimated yeast activities may easily be correlated to actual yeast cell activity. The non-dimensional fluorescence readings from the yeast activity sensors provide consistent and reproducible measurements of the trend of yeast cell growth and yeast cell death, which may be used to identify trends in the growth and death rates of yeast cells. In addition, it should be appreciated that, while yeast activity sensors that utilize fluorescence techniques are one type of yeast activity sensors that may be used in conjunction with the embodiments described herein, any other types of sensors that measure yeast activity reliably and accurately may also be used.

FIG. 6 is a schematic diagram illustrating how estimated yeast activity measurements may be generated. As illustrated, fermented biomass/water mash samples 64 from each of the fermenters 20 may periodically be taken. For example, a typical fermentation batch process in each fermenter 20 may take between approximately 48-72 hours, with an average batch cycle taking approximately 60 hours. The fermented biomass/water mash samples 64 may, however, be taken every 3-6 hours, depending on the level of accuracy desired. The fermented biomass/water mash samples 64 that are taken from the fermenters 20 may be delivered to a laboratory 66, where one or more yeast activity sensors 68 may be used to estimate the yeast activity of the fermented biomass/water mash samples 64. In certain embodiments, the fermented biomass/water mash samples 64 may be manually extracted from the fermenters 20 by a lab technician or other employee of the biofuel production plant 10. In this embodiment, the fermented biomass/water mash samples 64 will be manually transported to the laboratory 66. However, in other embodiments, the extraction of the fermented biomass/water mash samples 64 may be automated using equipment configured to extract the fermented biomass/water mash samples 64. In this embodiment, the laboratory 66 may actually be a testing panel proximate to the fermenter 20 from which the fermented biomass/water mash sample 64 is extracted. In addition, in certain embodiments, automation of the estimation of yeast activity using yeast activity sensors may enable continuous measurement of yeast activity, leading to even more refined levels of control.

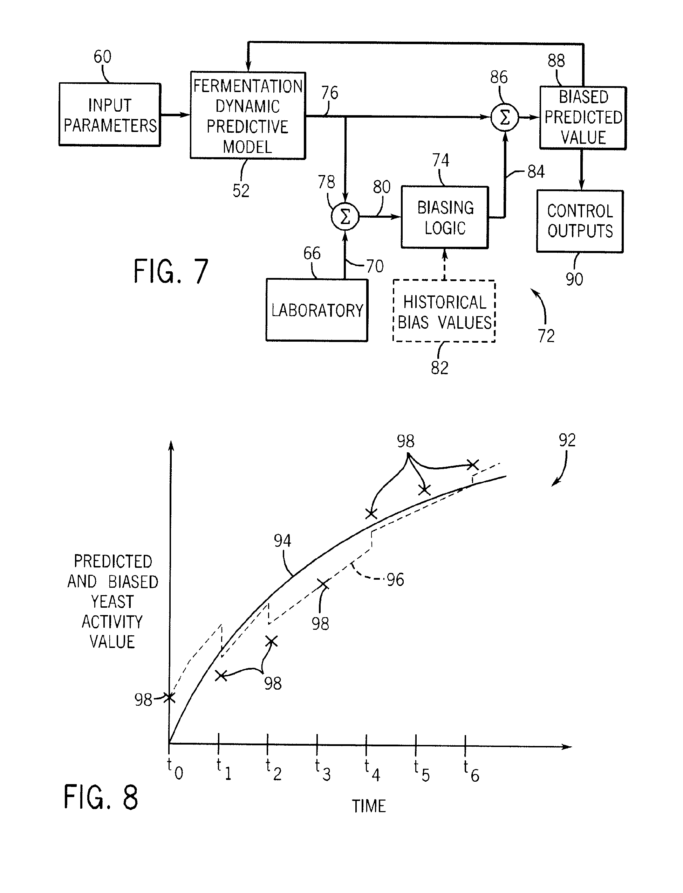

Once the fermented biomass/water mash sample 64 has been extracted from the fermenter 20, the fermented biomass/water mash sample 64 and chemicals may be introduced into the yeast activity sensor 68 such that the yeast cells within the fermented biomass/water mash sample 64 begin to fluoresce. The fluorescence from the yeast cells is then detected by the yeast activity sensor 68, and an estimated yeast activity value 70 for the fermented biomass/water mash sample 64 will be determined by the yeast activity sensor 68 based on the fluorescence. This estimated yeast activity value 70 may then be used by the fermentation dynamic predictive model 52 as a biasing factor to update the yeast activity values predicted by the fermentation dynamic predictive model 52. For example, FIG. 7 is a diagram 72 illustrating exemplary biasing logic 74 that utilizes the estimated yeast activity values 70 determined by the yeast activity sensors 68.

The fermentation dynamic predictive model 52 may derive a predicted or estimated value for yeast activity based on various input parameters 60 measured or otherwise derived from the biofuel production plant 10. As described above, the fermentation dynamic predictive model 52 may include an inferential model, such as a virtual sensor, configured to differentially derive a raw predicted value for yeast activity, referred to here by the reference numeral 76, based on the received input parameters 60. The yeast activity prediction 76 is biased using a biasing factor prior to being fed back into the fermentation dynamic predictive model 52. The biasing factor may be determined based upon a prediction error between the raw yeast activity prediction 76 and the estimated yeast activity value 70 from the laboratory 66. For example, the raw yeast activity prediction 76 and the estimated yeast activity value 70 may be evaluated using summation logic 78 to determine a prediction error 80. Using the prediction error 80 and, in certain embodiments, historical bias values 82 (which may represent biasing factors computed using previous laboratory measurements), the biasing logic 74 may compute a biasing factor 84.

The raw yeast activity prediction 76 is biased by the combining logic 86 using the biasing factor 84 determined by the biasing logic 74 to produce the biased or adjusted predicted value of the yeast activity 88. As will be appreciated, the combining logic 86 may be configured to implement addition or multiplicative correction. The biased predicted value 88 may then be fed back to the fermentation dynamic predictive model 52 for further iteration of the fermentation dynamic predictive model 52. The biased predicted value 88 may also be used to generate control actions for manipulating one or more aspects of the biofuel production plant 10 in order to bring certain control variables to a particular desired target set point or objective. More specifically, appropriate control outputs 90 may be generated based on the biased predicted value 88, and these control outputs 90 may be used to control various sub-processes (e.g., the fermentation sub-processes) of the biofuel production plant 10. Other examples of biasing logic used to bias the predicted yeast activity values 76 from the fermentation dynamic predictive model 52 are set forth in U.S. patent application publication number 2010/0082124, entitled "Asymmetrical Process Parameter Control System and Method," which is hereby incorporated by reference.

As described above, the biasing of the predicted yeast activity values 76 from the fermentation dynamic predictive model 52 using the estimated yeast activity values 70 from the yeast activity sensors 68 may be performed on a periodic schedule. For example, samples 64 from the fermenters 20 may be extracted and tested in the laboratory 66 every 3-6 hours during a typical 54-72 hour fermentation batch cycle. However, it should be noted that during initial development of the fermentation dynamic predictive model 52, samples 64 from the fermenters 20 may be extracted and tested in the laboratory 66 more frequently (e.g., approximately every hour) while the input parameters 60 are adjusted to facilitate model development. In addition, as also described above, in certain embodiments, the estimation of yeast activity using the yeast activity sensors 68 may be automated such that substantially continuous measurement of yeast activity may be achieved.

FIG. 8 is a graphical representation 92 of the control of yeast activity in the biofuel production plant 10. The graph 92 includes an x-axis representing time and a y-axis representing the value of yeast activity in appropriate units. The trace line 94 represents the raw predicted yeast activity values 76 from the fermentation dynamic predictive model 52 and the trace line 96 represents the biased predicted yeast activity values (e.g. 88) determined during an interval of the process defined by the control interval to to t₆.

During the process, the estimated yeast activity values 70 from the yeast activity sensors 68, represented here by the reference numbers 98, may be periodically provided from the laboratory 66. For example, the estimated yeast activity values 98 are provided at each of the times t₀, t₁, t₂, t₃, t₄, t₅, and t₆. Based upon a biasing factor calculated based on a prediction error defined by the estimated yeast activity values 98, the raw predicted yeast activity curve 94 may be biased, thus producing the biased prediction yeast activity curve 96. Further, the biasing factor may be periodically updated upon the receipt of each new estimated yeast activity value 98. For instance, at t₀, an initial estimated yeast activity value 98 may be received and a biasing factor may be computed based upon the prediction error between the estimated yeast activity value 98 and the raw predicted yeast activity value at t₀.

Referring now to the initial interval to to t₁, the time to may represent the start of a process or a grade change. Therefore, from the interval defined by to to t₁ on the graph 92, a historical bias value may not be available. Thus, as shown in the graph 92, the biasing factor determined for the interval to to t₁ may be equivalent to the prediction error between the raw predicted yeast activity curve 94 and the estimated yeast activity value 98 at t₀, as indicated by the biased prediction yeast activity curve 96. At t₁, a new estimated yeast activity value 98 may be received, and the biasing factor may be updated accordingly. For example, the measurement at t₁ indicates that estimated yeast activity value 98 is lower than the raw predicted yeast activity curve 94. Accordingly, the biasing factor may, for example, be updated to reflect a biasing factor that is somewhere between the prediction error at t₁ and the previous biasing factor from to to t₁, and may be implemented through the control interval defined by t₁ to t₂, as indicated by the biased prediction yeast activity curve 96. As such, each successive biasing factor may implicitly include the previous biasing factor. The computation of the biasing factor in FIG. 8 for each of the control intervals between the estimated yeast activity value 98 may be performed in a similar manner.

As described above, conventional techniques for monitoring yeast activity include manual counting of active yeast cells by lab technicians. Using yeast activity sensors 68 to measure yeast activity directly, more accurate fermentation dynamic predictive models 52 can be built for yeast growth. More specifically, for example, a virtual online analyzer (e.g., a virtual sensor) for yeast activity may be built and the yeast activity sensors 68 may be used for biasing predictions from the virtual sensor. This can lead to much more accurate closed loop control of the fermenters 20 of the biofuel production plant 10. In particular, by using more accurate predictions of yeast activity, including adjusting the predictions using periodic feedback and biasing, yeast growth (and by extension, biofuel production) in the fermenters 20 may be optimized. An advantage of this type of closed loop control and periodic feedback is that the biasing nature allows for changes in the fermentation sub-processes (e.g., introduction of different types of yeast) to be continually accounted for. It should be noted that, although described herein as applying to the production of biofuels, any processes where yeast is used (e.g., in conjunction with sugar cane) may benefit from the techniques described herein.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method for controlling a biofuel production process, comprising:
(a) predicting a yeast activity value of a fermentation sub-process of the biofuel production process using a dynamic predictive model;
(b) estimating the yeast activity value using a yeast activity sensor;
(c) adjusting the predicted yeast activity value using the estimated yeast activity value; and
(d) controlling the biofuel production process based on the adjusted predicted yeast activity value.

2. The method of claim 1, wherein the dynamic predictive model is an inferential model.

3. The method of claim 1 or 2, wherein adjusting the predicted yeast activity value comprises determining a biasing value based on the predicted yeast activity value and the estimated yeast activity value, preferably comprising determining the biasing value based at least partially on historical biasing values.

4. The method of one of claims 1 to 3, wherein controlling the biofuel production process comprising controlling the fermentation sub-process.

5. The method of one of claims 1 to 4, comprising repeating steps (a)-(d) during a batch cycle of the fermentation sub-process, preferably comprising repeating steps (a)-(d) approximately every 3-6 hours.

6. The method of one of claims 1 to 5, wherein estimating the yeast activity value comprises manually extracting a sample from the fermentation sub-process and manually delivering the sample to the yeast activity sensor.

7. The method of one of claims 1 to 6, wherein estimating the yeast activity value comprises extracting a sample from the fermentation sub-process in an automated manner and delivering the sample to the yeast activity sensor in an automated manner.

8. A control system, comprising:
a yeast activity sensor configured to receive a sample of a fermentation sub-process of the biofuel production process and to determine an estimated yeast activity value;
an inferential model configured to determine a predicted yeast activity value;
adjusting circuitry configured to determine an adjustment value based at least partially upon a prediction error between the estimated yeast activity value and the predicted yeast activity value;
combiner logic configured to adjust the predicted yeast activity value using the adjustment value; and
a control model configured to control the biofuel production process based at least partially upon the adjusted predicted yeast activity value.

9. The control system of claim 8, wherein the adjusting circuitry is configured to determine the adjustment value based at least partially on historical adjustment values.

10. The control system of claim 8 or 9, wherein the control model is configured to control the fermentation sub-process of the biofuel production process.

11. The control system of one of claims 8 to 10, wherein the estimated yeast activity value, the predicted yeast activity value, and the adjustment value are determined periodically during a batch cycle of the fermentation sub-process, preferably wherein the estimated yeast activity value, the predicted yeast activity value, and the adjustment value are determined approximately every 3-6 hours and/or wherein the inferential model is updated based at least partially on the adjusted predicted yeast activity value.

12. A method of controlling a biofuel production process, comprising:
controlling a fermentation sub-process of the biofuel production process based on a predicted yeast activity value from a dynamic predictive model, wherein the predicted yeast activity value is biased by an estimated yeast activity value generated by a yeast activity sensor.

13. The method of claim 12, wherein the yeast activity sensor determines the estimated yeast activity value based on a sample from the fermentation sub-process that has been manually extracted from the fermentation sub-process and manually delivered to the yeast activity sensor.

14. The method of claim 12 or 13, wherein the yeast activity sensor determines the estimated yeast activity value based on a sample from the fermentation sub-process that has been extracted from the fermentation sub-process in an automated manner and delivered to the yeast activity sensor in an automated manner.

15. The method of one of claims 12 to 14, wherein the dynamic predictive model is an inferential model, preferably wherein the dynamic predictive model determines the predicted yeast activity value based on parameters of the fermentation sub-process other than yeast activity or yeast growth.
